# EUROPEAN PATENT APPLICATION

(11) **EP 4 333 130 A2**
(43) Date of publication of application: **06.03.2024**
(21) Application number: 23193866.3
(22) Date of filing: 29.08.2023
(51) Int. Cl.: H01M 4/66, H01M 50/105, H01M 50/119, H01M 50/134, H01M 50/136, H01M 4/02, H01M 4/04

(54) **BATTERY CELL, BATTERY, AND ELECTRIC DEVICE**

(30) Priority: 30.08.2022 CN 202211048622
(71) Applicant: Ningde Amperex Technology Ltd., Ningde City, Fujian 352100 (CN)
(72) Inventor: HUANG, Shaojun, Ningde City, Fujian Province, People s Republic of China, 352100 (CN); LAO, Shaojiang, Ningde City, Fujian Province, People s Republic of China, 352100 (CN); LAI, Shibin, Ningde City, Fujian Province, People s Republic of China, 352100 (CN); ZHU, Aosheng, Ningde City, Fujian Province, People s Republic of China, 352100 (CN)
(74) Representative: Icosa

(57) **Abstract**

A battery cell (100) includes an electrode assembly (10) and a packaging bag (20). The electrode assembly (10) includes first electrode plates (11), second electrode plates (12) and separators (13). The first electrode plates (11) include two outer electrode plates (11a) and at least one inner electrode plate (11b) . In the first direction, the two outer electrode plates (11a) are disposed on two outermost sides of the electrode assembly (10) respectively, the inner electrode plate (11b) is disposed between the two outer electrode plates (11a), and the second electrode plates (12) are disposed between the two outer electrode plates (11a) . The packaging bag (20) includes a metal layer (21), and a relationship between a first strength S1 of the first current collectors (111) in the outer electrode plates (11a) and a second strength S2 of the metal layer (21) satisfies: 0.2 ≤ S1/S2 ≤ 0.5.

## Description

### TECHNICAL FIELD

The present application relates to the technical field of energy storage, in particular to a battery cell, a battery, and an electric device.

### BACKGROUND

Traditional pouch batteries generally use aluminum-plastic films as packaging bags. Due to the low strength and hardness of the aluminum-plastic films, the ability to resist impact is poor, which affects the safety performance of the batteries.

### SUMMARY

In view of the above condition, it is necessary to provide a battery cell, which can improve the safety performance thereof.

An embodiment of the present application provides a battery cell. The battery cell includes an electrode assembly and a packaging bag, and the electrode assembly is contained in the packaging bag. The electrode assembly includes first electrode plates and second electrode plates mutually stacked in a first direction, and separators disposed between the first electrode plates and the second electrode plates. Each of the first electrode plates includes a first current collector. The first electrode plates include two outer electrode plates and at least one inner electrode plate. In the first direction, the two outer electrode plates are disposed on two outermost sides of the electrode assembly respectively, the inner electrode plate is disposed between the two outer electrode plates, and the second electrode plates are disposed between the two outer electrode plates. The packaging bag includes a metal layer, and a relationship between a first strength S1 of the first current collector in the outer electrode plate and a second strength S2 of the metal layer satisfies: 0.2 ≤ S 1/S2 ≤ 0.5.

The first current collector in the outer electrode plate and the metal layer cooperate to improve the structural strength and mechanical properties of the packaging bag. Moreover, by limiting 0.2 ≤ S1/S2 ≤ 0.5, the second strength S2 and the first strength S1 of the battery cell from outside to inside decrease sequentially. When the battery cell is impacted and the impact force reaches a strength that causes the metal layer to fracture and separate, the first current collector in the outer electrode plate may fracture and separate under the action of the impact force. Due to the fracture and separation, there is no connected electrode plate or electrode plate fragments in the fractured outer electrode plate, thereby reducing the risk of occurrence of a short circuit and improving the safety of the battery cell.

In some embodiments of the present application, 0.3 ≤ S1/S2 ≤ 0.4. By limiting S1/S2 ≥ 0.3, the first current collector of the outer electrode plate further has a structural strength for protecting the inner electrode plate and the second electrode plate; and limiting S1/S2 ≤ 0.4 further facilitates fracture and separation of the first current collector of the outer electrode plate when the first current collector is subjected to an impact.

In some embodiments of the present application, a relationship between the first strength S1 and a third strength S3 of the first current collector in the inner electrode plate satisfies: 1 ≤ S1/S3 ≤ 1.5, so that the second strength, the first strength, and the third strength of the battery cell from outside to inside decrease sequentially. When the battery cell is impacted and the impact force reaches a strength that causes the metal layer to fracture and separate, the first current collector in the outer electrode plate and the first current collector in the inner electrode plate may fracture and separate sequentially under the action of the impact force. Due to the fracture and separation, there is no connected electrode plate or electrode plate fragments in the fractured outer electrode plate and inner electrode plate, thereby reducing the risk of occurrence of a short circuit and improving the safety of the battery cell.

In some embodiments of the present application, 1 ≤ S 1/S3 ≤ 1.2. By limiting S 1/S3 ≥ 1, the first current collector of the outer electrode plate further has a structural strength for protecting the inner electrode plate and the second electrode plate; and limiting S1/S3 ≤ 1.2 further facilitates fracture and separation of the first current collector of the outer electrode plate when the first current collector is subjected to an impact.

In some embodiments of the present application, a relationship between a first elongation δ1 of the first current collector in the outer electrode plate and a second elongation δ2 of the metal layer satisfies: 0.2 ≤ δ1/δ2 ≤ 0.5.

Under a same deformation situation, a smaller elongation value causes easier fracture. By limiting 0.2 ≤ δ1/δ2 ≤ 0.5, the second elongation δ2 and the first elongation δ1 of the battery cell from outside to inside decrease sequentially while the structural strength and mechanical properties of the battery cell are improved. When the battery cell is impacted and the impact force reaches a strength that causes the metal layer to fracture and separate, the first current collector in the outer electrode plate may fracture and separate under the action of the impact force. Due to the fracture and separation, there is no connected electrode plate or electrode plate fragments in the fractured outer electrode plate, thereby reducing the risk of occurrence of a short circuit and improving the safety of the battery cell.

In some embodiments of the present application, 0.3 ≤ δ1/δ2 ≤ 0.4. By limiting δ1/δ2 ≥ 0.3, the first current collector of the outer electrode plate further has a structural strength for protecting the inner electrode plate and the second electrode plate; and limiting δ1/δ2 ≤ 0.4 further facilitates fracture and separation of the first current collector of the outer electrode plate when the first current collector is subjected to an impact.

In some embodiments of the present application, a relationship between the first elongation δ1 and a third elongation δ3 of the first current collector in the inner electrode plate satisfies: 1 ≤ δ1/δ3 ≤ 1.5, so that the second elongation δ2, the first elongation δ1, and the third elongation δ3 of the battery cell from outside to inside decrease sequentially while the structural strength and the mechanical properties of the battery cell are improved. When the battery cell is impacted and the impact force reaches a strength that causes the metal layer to fracture and separate, the first current collector in the outer electrode plate and the first current collector in the inner electrode plate may fracture and separate sequentially under the action of the impact force. Due to the fracture and separation, there is no connected electrode plate or electrode plate fragments in the fractured outer electrode plate and inner electrode plate, thereby reducing the risk of occurrence of a short circuit and improving the safety of the battery cell.

In some embodiments of the present application, 1 ≤ δ1/δ3 ≤ 1.2. By limiting δ1/δ3 ≥ 1, the first current collector of the outer electrode plate further has a structural strength for protecting the inner electrode plate and the second electrode plate; and limiting δ1/δ3 ≤ 1.2 further facilitates fracture and separation of the first current collector of the outer electrode plate when the first current collector is subjected to an impact.

In some embodiments of the present application, a relationship between a first thickness d1 of the first current collector in the outer electrode plate and a second thickness d2 of the first current collector in the inner electrode plate satisfies: d2 ≤ d1, so that the first strength S1 and the third strength S3 are controlled to satisfy 1 ≤ S1/S3 ≤ 1.5 under the condition that materials of the first current collectors are the same.

In some embodiments of the present application, the first current collectors are made of copper to limit the first strength S1 and the first elongation δ1 of the first current collector in the outer electrode plate, and the third strength S3 and the third elongation δ3 of the first current collector in the inner electrode plate.

In some embodiments of the present application, the metal layer is made of steel. As compared with an existing way of using an aluminum-plastic film as a packaging bag, the structural strength of steel is superior to the structural strength of aluminum, so that the structural strength and mechanical properties of the packaging bag can be improved.

In some embodiments of the present application, the first electrode plate further includes a first active material layer applied on the first current collector. In the outer electrode plate, the first active material layer is applied on a surface, facing the inner electrode plate, of the first current collector, so as to reduce the risk that the first active material layer of the outer electrode plate corrodes the packaging bag, and improve the safety of the battery cell. In the inner electrode plate, the first active material layers are applied on two surfaces, opposite to each other in the first direction, of the first current collector, so as to increase the energy density of the battery.

An embodiment of the present application further provides a battery including the battery cell according to any of the above embodiments.

An embodiment of the present application further provides an electric device including the battery according to any of the above embodiments.

In the battery cell, and the battery and the electric device provided with the battery cell of the present application, the first current collector in the outer electrode plate and the metal layer cooperate to improve the structural strength and mechanical properties of the packaging bag. Moreover, by limiting 0.2 ≤ S1/S2 ≤ 0.5, the second strength S2 and the first strength S1 from outside to inside of the battery cell decrease sequentially. When the battery cell is impacted and the impact force reaches a strength that causes the metal layer to fracture and separate, the first current collector in the outer electrode plate may fracture and separate under the action of the impact force. Due to the fracture and separation, there is no connected electrode plate or electrode plate fragments in the fractured outer electrode plate, thereby reducing the risk of occurrence of a short circuit and improving the safety of the battery cell.

### BRIEF DESCRIPTION OF DRAWINGS

FIG. 1 is a schematic diagram of a first structure of a battery cell according to an embodiment of the present application.
FIG. 2 is a schematic diagram of a second structure of a battery cell according to an embodiment of the present application.
FIG. 3 is a schematic dimension diagram of a first electrode plate, a second electrode plate, and a separator of a battery cell according to an embodiment of the present application.
FIG. 4 is a schematic structural diagram of an electric device according to an embodiment of the present application.

Description of reference signs of main components

| | |
|---|---|
| Battery cell | 100 |
| Battery | 200 |
| Electric device | 300 |
| Electrode assembly | 10 |
| First electrode plate | 11 |
| Outer electrode plate | 11a |
| Inner electrode plate | 11b |
| First current collector | 111 |
| First active material layer | 112 |
| Second electrode plate | 12 |
| Second current collector | 121 |
| Second active material layer | 122 |
| Separator | 13 |
| Packaging bag | 20 |
| Top wall | 20a |
| Bottom wall | 20b |
| Side wall | 20c |
| Metal layer | 21 |
| First polymer layer | 22 |
| Second polymer layer | 23 |
| First tab | 31 |
| Second tab | 32 |
| First tab lead | 33 |
| Second tab lead | 34 |
| Housing | 91 |
| Device body | 92 |
| First direction | Z |
| Second direction | X |
| Third direction | Y |

The present application is further described by using the following specific implementations with reference to the foregoing accompanying drawings.

### DETAILED DESCRIPTION OF EMBODIMENTS

The technical solutions in the embodiments of the present application are described with reference to the accompanying drawings in the embodiments of the present application. Apparently, the described embodiments are merely some rather than all of the embodiments of the present application.

It should be noted that when one element is referred to as being "connected" to another element, it may be directly connected to the another element or there may also be an element provided therebetween. When one element is referred to as being "disposed" on another element, it may be directly disposed on the another element or there may also be an element provided therebetween.

Unless otherwise defined, all technical terms or scientific terms used herein shall have the same meaning as understood by persons of ordinary skill in the art to which the present application belongs. The terms used herein in the specification of the present application are merely for the purpose of describing specific embodiments and are not intended to limit the present application. The term "and/or" used herein includes any and all combinations of one or more of the relevant listed items. As used herein, the terms "vertical", "horizontal", "left", "right", "top," "bottom," and similar expressions are merely for illustrative purposes and are not intended to limit the present application.

It can be understood that when two elements are disposed parallel to/perpendicular to each other in a same direction, a certain angle may exist between the two elements, a tolerance of 0-±10% is allowed between the two elements.

An embodiment of the present application provides a battery cell including an electrode assembly and a packaging bag. The electrode assembly is contained in the packaging bag. The electrode assembly includes first electrode plates and second electrode plates mutually stacked in a first direction, and separators disposed between the first electrode plates and the second electrode plates. Each of the first electrode plates includes a first current collector. The first electrode plates include two outer electrode plates and at least one inner electrode plate. In the first direction, the two outer electrode plates are disposed on two outermost sides of the electrode assembly respectively, the inner electrode plate is disposed between the two outer electrode plates, and the second electrode plates are disposed between the two outer electrode plates. The packaging bag includes a metal layer, and a relationship between a first strength S 1 of the first current collector in the outer electrode plate and a second strength S2 of the metal layer satisfies: 0.2 ≤ S1/S2 ≤ 0.5.

In the above battery cell, the first current collector in the outer electrode plate and the metal layer cooperate to improve the structural strength and mechanical properties of the packaging bag. Moreover, by limiting 0.2 ≤ S1/S2 ≤ 0.5, the second strength S2 and the first strength S1 of the battery cell from outside to inside decrease sequentially. When the battery cell is impacted and the impact force reaches a strength that causes the metal layer to fracture and separate, the first current collector in the outer electrode plate may fracture and separate under the action of the impact force. Due to the fracture and separation, there is no connected electrode plate or electrode plate fragments in the fractured outer electrode plate, thereby reducing the risk of occurrence of a short circuit and improving the safety of the battery cell.

Embodiments of the present application are further described with reference to the accompanying drawings.

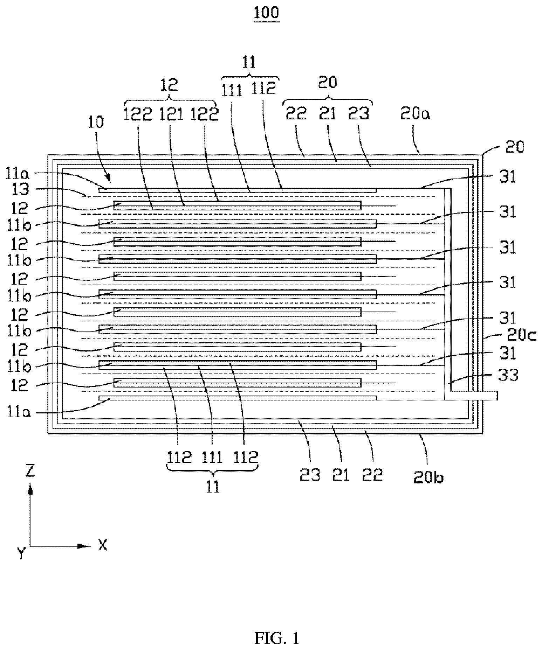

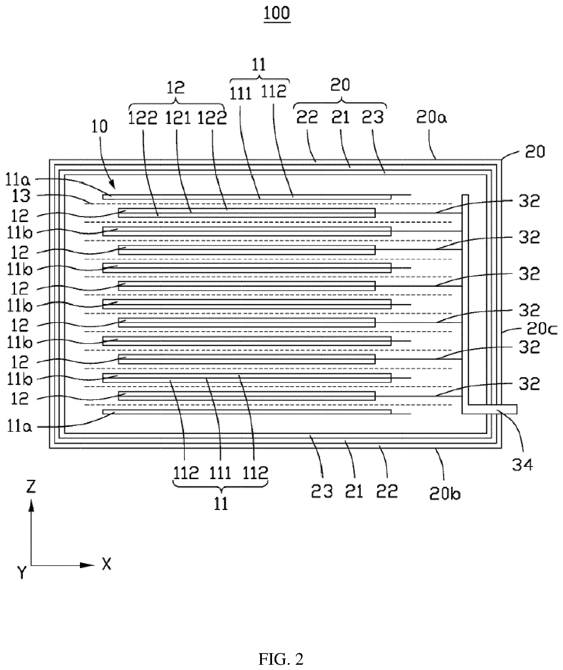

Referring to FIGS. 1 and 2, an embodiment of the present application provides a battery cell 100, the battery cell 100 includes an electrode assembly 10 and a packaging bag 20, the electrode assembly 10 is contained in the packaging bag 20, and the packaging bag 20 is configured to encapsulate the electrode assembly 10.

The electrode assembly 10 includes first electrode plates 11 and second electrode plates 12 mutually stacked in a first direction Z, and separators 13 disposed between the first electrode plates 11 and the second electrode plates 12. Each of the first electrode plate 11 includes a first current collector 111 and a first active material layer 112 applied on the first current collector 111. Each of the second electrode plates 12 includes a second current collector 121 and a second active material layer 122 applied on the second current collector 121. The first active material layer 112 and the second active material layer 122 are configured to convert chemical energy into electrical energy. The first current collector 111 and the second current collector 121 conduct a current generated in an electrochemical reaction to an external circuit, thereby realizing the process of converting chemical energy into electrical energy.

The first electrode plates 11 include two outer electrode plates 11a and at least one inner electrode plate 11b. In the first direction Z, the two outer electrode plates 11a are disposed on two outermost sides of the electrode assembly 10, respectively; the inner electrode plate 11b is disposed between the two outer electrode plates 11a; and the second electrode plates 12 are disposed between the two outer electrode plates 11a.

The packaging bag 20 includes a metal layer 21, and the metal layer 21 is configured to improve the structural strength and mechanical properties of the packaging bag 20, thereby absorbing and withstanding the impact of external forces.

A relationship between a first strength S1 of the first current collector 111 in the outer electrode plate 11a and a second strength S2 of the metal layer 21 satisfies: 0.2 ≤ S1/S2 ≤ 0.5.

The first current collector 111 in the outer electrode plate 11a and the metal layer 21 cooperate to improve the structural strength and mechanical properties of the packaging bag 20. Moreover, by limiting 0.2 ≤ S1/S2 ≤ 0.5, the second strength S2 and the first strength S1 of the battery cell 100 from outside to inside decrease sequentially. When the battery cell 100 is impacted and the impact force reaches a strength that causes the metal layer 21 to fracture and separate, the first current collector 111 in the outer electrode plate 11a may fracture and separate under the action of the impact force. Due to the fracture and separation, there is no connected electrode plate or electrode plate fragments in the fractured outer electrode plate 11a, thereby reducing the risk of occurrence of a short circuit and improving the safety of the battery cell 100.

By limiting S1/S2 ≥ 0.2, the first current collector 111 of the outer electrode plate 11a has a structural strength for protecting the inner electrode plate 11b and the second electrode plate 12; and limiting S1/S2 ≤ 0.5 facilitates fracture and separation of the first current collector 111 of the outer electrode plate 11a when the first current collector is subjected to an impact.

Optionally, S1/S2 may be one of 0.2, 0.25, 0.3, 0.35, 0.4, 0.45, 0.5, and any other value in the range of 0.2 to 0.5.

Further, the relationship between the first strength S1 of the first current collector 111 in the outer electrode plate 11a and the second strength S2 of the metal layer 21 satisfies: 0.3 ≤ S1/S2 ≤ 0.4. By limiting S1/S2 ≥ 0.3, the first current collector 111 of the outer electrode plate 11a further has a structural strength for protecting the inner electrode plate 11b and the second electrode plate 12; and limiting S1/S2 ≤ 0.4 further facilitates fracture and separation of the first current collector 111 of the outer electrode plate 11a when the first current collector is subjected to an impact.

A relationship between the first strength S1 of the first current collector 111 in the outer electrode plate 11a and a third strength S3 of the first current collector 111 in the inner electrode plate 11b satisfies: 1 ≤ S1/S3 ≤ 1.5.

By limiting 1 ≤ S1/S3 ≤ 1.5, the second strength S2, the first strength S1, and the third strength S3 of the battery cell 100 from outside to inside decrease sequentially. When the battery cell 100 is impacted and the impact force reaches a strength that causes the metal layer 21 to fracture and separate, the first current collector 111 in the outer electrode plate 11a and the first current collector 111 in the inner electrode plate 11b may fracture and separate sequentially under the action of the impact force. Due to the fracture and separation, there is no connected electrode plate or electrode plate fragments in the fractured outer electrode plate 11a and inner electrode plate 11b, thereby reducing the risk of occurrence of a short circuit and improving the safety of the battery cell 100.

By limiting S1/S3 ≥ 1, the first current collector 111 of the outer electrode plate 11a has a structural strength for protecting the inner electrode plate 11b and the second electrode plate 12; and limiting S1/S3 ≤ 1.5 facilitates fracture and separation of the first current collector 111 of the outer electrode plate 11a when the first current collector is subjected to an impact.

Optionally, S1/S3 may be one of 1, 1.1, 1.2, 1.3, 1.4, 1.5, and any other value in the range of 1 to 1.5.

Further, the relationship between the first strength S1 of the first current collector 111 in the outer electrode plate 11a and the third strength S3 of the first current collector 111 in the inner electrode plate 11b satisfies: 1 ≤ S1/S3 ≤ 1.2.Limiting S1/S3 ≤ 1.2 further facilitates fracture and separation of the first current collector 111 of the outer electrode plate 11a when the first current collector is subjected to an impact.

In some embodiments, a relationship between a first elongation δ1 of the first current collector 111 in the outer electrode plate 11a and a second elongation δ2 of the metal layer 21 satisfies: 0.2 ≤ δ1/δ2 ≤ 0.5.

Under a same deformation situation, a smaller elongation value causes easier fracture. By limiting 0.2 ≤ δ1/δ2 ≤ 0.5, the second elongation δ2 and the first elongation δ1 of the battery cell 100 from outside to inside decrease sequentially while the structural strength and mechanical properties of the battery cell 100 are improved. When the battery cell 100 is impacted and the impact force reaches a strength that causes the metal layer 21 to fracture and separate, the first current collector 111 in the outer electrode plate 11a may fracture and separate under the action of the impact force. Due to the fracture and separation, there is no connected electrode plate or electrode plate fragments in the fractured outer electrode plate 11a, thereby reducing the risk of occurrence of a short circuit and improving the safety of the battery cell 100.

By limiting δ1/δ2 ≥ 0.2, the first current collector 111 of the outer electrode plate 11a has a structural strength for protecting the inner electrode plate 11b and the second electrode plate 12; and limiting δ1/δ2 ≤ 0.5 facilitates fracture and separation of the first current collector 111 of the outer electrode plate 11a when the first current collector is subjected to an impact.

Optionally, δ1/δ2 may be one of 0.2, 0.25, 0.3, 0.35, 0.4, 0.45, 0.5, and any other value in the range of 0.2 to 0.5.

Further, the relationship between the first elongation δ1 of the first current collector 111 in the outer electrode plate 11a and the second elongation δ2 of the metal layer 21 satisfies: 0.3 ≤ δ1/δ2 ≤ 0.4. By limiting δ1/δ2 ≥ 0.3, the first current collector 111 of the outer electrode plate 11a further has a structural strength for protecting the inner electrode plate 11b and the second electrode plate 12; and limiting δ1/δ2 ≤ 0.4 further facilitates fracture and separation of the first current collector 111 of the outer electrode plate 11a when the first current collector is subjected to an impact.

In some embodiments, a relationship between the first elongation δ1 of the first current collector 111 in the outer electrode plate 11a and a third elongation δ3 of the first current collector 111 of the inner electrode plate 11b satisfies: 1 ≤ δ1/δ3 ≤ 1.5.

By limiting 1 ≤ δ1/δ3 ≤ 1.5, the second elongation δ2, the first elongation δ1, and the third elongation δ3 of the battery cell 100 from outside to inside decrease sequentially while the structural strength and the mechanical properties of the battery cell 100 are improved. When the battery cell 100 is impacted and the impact force reaches a strength that causes the metal layer 21 to fracture and separate, the first current collector 111 in the outer electrode plate 11a and the first current collector 111 in the inner electrode plate 11b may fracture and separate sequentially under the action of the impact force. Due to the fracture and separation, there is no connected electrode plate or electrode plate fragments in the fractured outer electrode plate 11a and inner electrode plate 11b, thereby reducing the risk of occurrence of a short circuit and improving the safety of the battery cell 100.

By limiting δ1/δ3 ≥ 1, the first current collector 111 of the outer electrode plate 11a has a structural strength for protecting the inner electrode plate 11b and the second electrode plate 12; and limiting δ1/δ3 ≤ 1.5 facilitates fracture and separation of the first current collector 111 of the outer electrode plate 11a when the first current collector is subjected to an impact.

Optionally, δ1/δ3 may be one of 1, 1.1, 1.2, 1.3, 1.4, 1.5, and any other value in the range of 1 to 1.5.

Further, the relationship between the first elongation δ1 of the first current collector 111 in the outer electrode plate 11a and the third elongation δ3 of the first current collector 111 in the inner electrode plate 11b satisfies: 1 ≤ δ1/δ3 ≤ 1.2. Limiting δ1/δ3 ≤ 1.2 further facilitates fracture and separation of the first current collector 111 of the outer electrode plate 11a when the first current collector is subjected to an impact.

In some embodiments, the third elongation δ3 ≥ 2% and the first elongation δ1 ≤ 10%, allowing the first current collector 111 of the outer electrode plate 11a to have a structural strength for protecting the inner electrode plate 11b and the second electrode plate 12, and facilitating fracture and separation of the first current collector 111 of the outer electrode plate 11a when the first current collector is subjected to an impact.

Optionally, values of δ3 and δ1 may be δ3=2% and δ1=3%; δ3=4% and δ1=6%; δ3=6% and 61=9%, and a set of any other values that satisfy the range.

Further, the third elongation δ3 ≥ 4% and the first elongation δ1 ≤ 8%, further allowing the first current collector 111 of the outer electrode plate 11a to have a structural strength for protecting the inner electrode plate 11b and the second electrode plate 12, and facilitating fracture and separation of the first current collector 111 of the outer electrode plate 11a when the first current collector is subjected to an impact.

In some embodiments, a relationship between a first thickness d1 of the first current collector 111 in the outer electrode plate 11a and a second thickness d2 of the first current collector 111 in the inner electrode plate 11b satisfies: d2 ≤ d1, so that the first strength S1 and the third strength S3 satisfy 1 ≤ S1/S3 ≤ 1.5 under the condition that materials of the first current collectors 111 are the same.

It can be understood that when d2 = d1, the thicknesses of the first current collectors 111 in the electrode assembly 10 are the same, and as compared with an existing way of increasing a thickness of an outermost current collector to improve the structural strength of a battery cell, a thickness space occupied by the first current collector 111 can be limited, thereby increasing the energy density of a battery.

In some embodiments, the second thickness d2 ≥ 4 µm and the first thickness d1 ≤ 20 µm, so as to limit the thickness space occupied by the first current collector 111.

Optionally, values of d2 and d1 may be d2=4mm and d1=4mm; d2=4mm and d1=5mm; d2=5mm and d1=7mm, and a set of any other values that satisfy the range.

Further, d2 ≥ 5 µm and d1 ≤ 16 µm, so as to further limit the thickness space occupied by the first current collector 111.

Still referring to FIGS. 1 and 2, in some embodiments, the packaging bag 20 includes a top wall 20a, a bottom wall 20b, and side walls 20c, the top wall 20a and the bottom wall 20b are disposed opposite each other in the first direction Z, and the side walls 20c are connected between the top wall 20a and the bottom wall 20b to encapsulate the electrode assembly 10. The top wall 20a is disposed adjacent to one of the outer electrode plates 11a, and the metal layer 21 in the top wall 20a and the corresponding outer electrode plate 11a cooperate to improve the structural strength and mechanical properties of one side of the battery cell 100 in the first direction Z. The bottom wall 20b is disposed adjacent to the other outer electrode plate 11a, and the metal layer 21 in the bottom wall 20b and the corresponding outer electrode plate 11a cooperate to improve the structural strength and mechanical properties of the other side of the battery cell 100 in the first direction Z.

In some embodiments, the metal layer 21 in the top wall 20a and the first current collector 111 in the corresponding outer electrode plate 11a are disposed in parallel in a direction perpendicular to the first direction Z, so that the metal layer 21 in the top wall 20a and the first current collector 111 in the corresponding outer electrode plate 11a are right aligned with an impact object in an impact process, thereby facilitating fracture of the metal layer 21 in the top wall 20a and the first current collector 111 in the corresponding outer electrode plate 11a caused by stress.

In some embodiments, the metal layer 21 in the bottom wall 20b and the first current collector 111 in the corresponding outer electrode plate 11a are disposed in parallel in a direction perpendicular to the first direction Z, so that the metal layer 21 in the bottom wall 20b and the first current collector 111 in the corresponding outer electrode plate 11a are right aligned with an impact object in an impact process, thereby facilitating fracture of the metal layer 21 in the bottom wall 20b and the first current collector 111 in the corresponding outer electrode plate 11a caused by stress.

In some embodiments, the first electrode plates 11 are negative electrode plates and the second electrode plates 12 are positive electrode plates.

In some embodiments, the first current collector 111 is made of copper, so as to limit the first strength S1 and the first elongation δ1 of the first current collector 111 in the outer electrode plate 11a, and the third strength S3 and the third elongation δ3 of the first current collector 111 in the inner electrode plate 11b.

Still to referring to FIGS. 1 and 2, in some embodiments, the packaging bag 20 further includes a first polymer layer 22 and a second polymer layer 23, and the metal layer 21 is disposed between the first polymer layer 22 and the second polymer layer 23. The metal layer 21 is made of a metal material. Optionally, the metal layer 21 is made of steel. As compared with an existing way of using an aluminum-plastic film as a packaging bag, the structural strength of steel is superior to the structural strength of aluminum, so that the structural strength and mechanical properties of the packaging bag 20 can be improved.

The first polymer layer 22 is disposed on a side, away from the electrode assembly 10, of the metal layer 21, and plays a protection role on the outermost side of the battery cell 100. Optionally, the first polymer layer 22 is made of nylon. The second polymer layer is disposed on a side, facing the electrode assembly 10, of the metal layer 21, and is configured to play the role of encapsulation connection on the inner side of the battery cell 100. Optionally, the second polymer layer 23 is made of CPP (casting polypropylene).

Still referring to FIGS. 1 and 2, in some embodiments, in the outer electrode plate 11a, the first active material layer 112 is applied on a surface, facing the inner electrode plate 11b, of the first current collector 111, so as to reduce the risk that the first active material layer 112 of the outer electrode plate 11a corrodes the packaging bag 20, and improve the safety of the battery cell 100.

In some embodiments, in the inner electrode plate 11b, the first active material layers 112 are applied on two surfaces, opposite to each other in the first direction Z, of the first current collector 111; and in the second electrode plate 12, the second active material layers 122 are applied on two surfaces, opposite to each other in the first direction Z, of the second current collector 121, so as to improve the energy density of the battery.

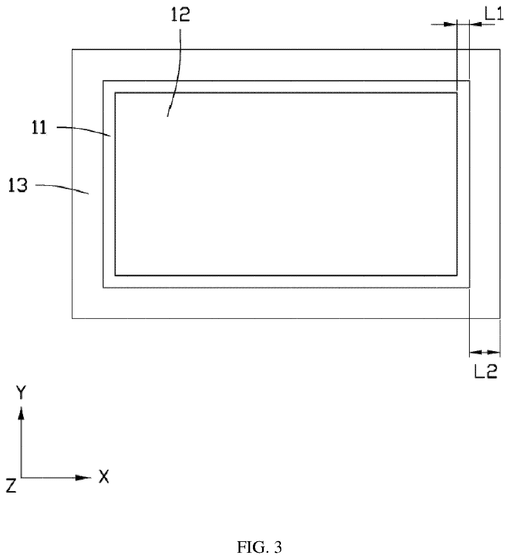

Referring to FIG. 3, in some embodiments, in the first direction Z, a projection formed by the second electrode plate 12 on the first electrode plate 11 is located within the range of the first electrode plate 11, so that the first electrode plate 11 can fully receive lithium ions generated by the second electrode plate 12 when the battery cell 100 is used, thereby improving the stability of the use of the battery cell 100. A projection formed by the first electrode plate 11 on the separator 13 is located within the range of the separator 13, so as to reduce the risk of generation of a short circuit between the first electrode plate 11 and the second electrode plate 12, and improve the safety of the battery cell 100.

A length direction of the battery cell 100 is a second direction X, a width direction is a third direction Y, and the first direction Z, the second direction X and the third direction Y are disposed perpendicular to each other.

In some embodiments, in the second direction X and/or the third direction Y, a distance between the outermost edge of the second electrode plate 12 and the corresponding outermost edge of the first electrode plate 11 disposed on the same side is L1, and L1 ≥ 0.5 mm.

In some embodiments, in the second direction X and/or the third direction Y, a distance between the outermost edge of the first electrode plate 11 and the corresponding outermost edge of the separator 13 disposed on the same side is L2, and L2 ≥ 1 mm.

In some embodiments, the first electrode plates 11 are symmetrically arranged in the first direction Z, the second electrode plates 12 are symmetrically arranged in the first direction Z, and the separators 13 are symmetrically arranged in the first direction Z, so as to reduce the risk of the battery cell 100 bending to one side during cycling, and improve the structural stability of the battery cell 100.

Still referring to FIGS. 1 and 2, in some embodiments, the battery cell 100 further includes a first tab 31 and a second tab 32, the first tab 31 is electrically connected to the first electrode plate 11, and the second tab 32 is electrically connected to the second electrode plate 12. The battery cell 100 further includes a first tab lead 33 and a second tab lead 34. One end of the first tab lead 33 is electrically connected to the first tab 31, and the other end extends out of the packaging bag 20. One end of the second tab lead 34 is electrically connected to the second tab 32, and the other end extends out of the packaging bag 20.

The portions of the first tab lead 33 and the second tab lead 34 extending out of the packaging bag 20 are configured to be connected to an external circuit board. The external circuit board may be but is not limited to a BMS (Battery Management System), specifically, the BMS is provided with a plurality of electronic components, and the plurality of electronic components are capable of realizing modular functions such as data acquisition, control, protection, communication, power calculation, signal transmission, power transmission, and the like of the battery cell 100.

In some embodiments, the first tab 31 and the first electrode plate 11 are integrally formed, so as to improve the stability of the structure between the first tab 31 and the first electrode plate 11.

In some embodiments, the second tab 32 and the second electrode plate 12 are integrally formed, so as to improve the stability of the structure between the second tab 32 and the second electrode plate 12.

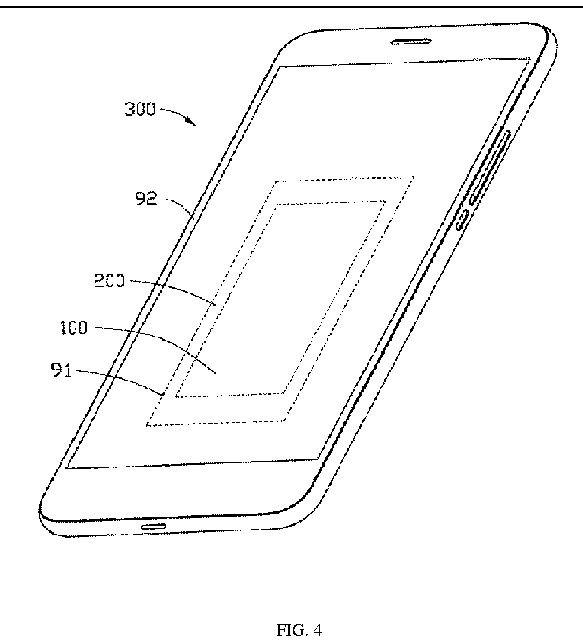

Referring to FIG. 4, the present application further provides a battery 200 including a housing 91 and the battery cell 100 according to any one of the above embodiments. The battery cell 100 is accommodated in the housing 91.

Referring to FIG. 4, an embodiment of the present application further provides an electric device 300 including the battery 200 according to any one of the above embodiments. The electric device 300 further includes a device body 92, and the battery 200 is electrically connected to the device body 92 and powers the device body 92. In some embodiments, the device body 92 may be an electronic device such as a mobile phone and a tablet computer, or a transportation device such as an electric vehicle.

The following specifies measurement methods for the first strength S 1, the second strength S2, the third strength S3, the first elongation δ1, the second elongation δ2, and the third elongation δ3 in the present application.

Measurement of the first strength S1 and the first elongation δ1 is used as an example. A first sample group is obtained in a longitudinal direction of the first current collector 111 of the outer electrode plate 11a, and a second sample group is obtained in a transverse direction of the first current collector 111 of the outer electrode plate 11a. The first sample group is cut into five samples having a size of 152 mm* 12.7 mm, and the second sample group is cut into five samples having a size of 152 mm* 12.7 mm.

A tensile force is applied to each of the 10 samples at a stretching rate of 50 mm/min until the samples are fractured. The strength data at the time of fracture of the samples is recorded as value A, an initial length of the samples is recorded as value B, and an elongation length before fracture is recorded as value C.

The strength and elongation of each sample are calculated, where the strength is A/(12.7*thickness) and the elongation is (C-B)/B*100%. The first strength S1 is an average of the strengths of the 10 samples, and the first elongation δ1 is the average of the elongations of the 10 samples.

The above value A, value B, value C, and corresponding strength and elongation can be obtained with an INSTRON tester.

It can be understood that when the second strength S2 and the second elongation δ2 are to be measured, a first sample group is obtained in a longitudinal direction of the metal layer 21 and a second sample group is obtained in a transverse direction of the metal layer 21. When the third strength S3 and the third elongation δ3 are to be measured, a first sample group is obtained in a longitudinal direction of the first current collector 111 of the inner electrode plate 11b and a second sample group is obtained in a transverse direction of the first current collector 111 of the inner electrode plate 11b. Other testing steps are similar to those described above and are not described in detail herein.

The present application is described below by using specific implementations.

An impact test is specified below:

Each of battery cells 100 in the comparative embodiments and the embodiments are fully charged and then placed on the surface of a test platform, a metal bar with a diameter of 15.8 mm ± 0.2 mm was placed horizontally in a surface center of the battery cell in a thickness direction, and a heavy object with a weight of 9.1 kg ± 0.1 kg was used to impact the surface of the battery cell with the metal bar from a height of 610 mm ± 25 mm in a free-fall state, and then observation was performed for 6 h. The passing standard is that the battery cell does not catch fire or explode.

Most parameters of the battery cells 100 in the comparative embodiments and the embodiments have most of the same parameters, and some chemical systems and battery cell structures commonly used in the art can be used. For example, the parameters include: a thickness of the battery cell is 4.60 mm; a voltage of the chemical system is 4.45 V; graphite is used as a positive electrode material, with a percentage of 97.7%; lithium cobaltate is used as a negative electrode material, with a percentage of 97.6%; a copper foil is used as the first current collector 111; an aluminum foil is used as the second current collector 121; the number of layers of the first current collector 111 or second current collector 121 is 15; a thickness of the second current collector 121 is 10 µm; and a thickness of the separator 13 is 15 µm. Each of the embodiments and comparative embodiments in the following tables have the same parameters except for parameters involved.

Table 1 Remaining parameters and test results for each battery cell in Comparative embodiments 1-2 and Embodiments 1-4

The battery cells 100 in the comparative embodiments and the embodiments in Table 1 also have the following same parameters: a ratio S1/S3 of the first strength S1 of the first current collector in the outer electrode plate and the third strength S3 of the first current collector in the inner electrode plate is 1.

**Table 1**

| Group | Comparative embodiment 1 | Comparative embodiment 2 | Embodiment 1 | Embodiment 2 | Embodiment 3 | Embodiment 4 |
|---|---|---|---|---|---|---|
| First thickness d1 of first current collector in outer electrode plate (µm) | 4 | 25 | 5 | 8 | 16 | 20 |
| Second thickness d2 of first current collector in inner electrode plate (µm) | 8 | 8 | 8 | 8 | 8 | 8 |
| First strength S1 of first current collector in outer electrode plate (N/mm2) | 158 | 489 | 171 | 254 | 340 | 425 |
| Second strength S2 of metal layer of packaging bag (N/mm2) | 852 | 852 | 852 | 852 | 852 | 852 |
| S1/S2 | 0.185 | 0.57 | 0.20 | 0.30 | 0.40 | 0.50 |
| Impact passing rate | 55P/90T | 50P/90T | 60P/90T | 70P/90T | 63P/90T | 57P/90T |
| | 61% | 56% | 67% | 78% | 70% | 63% |

As can be seen from Table 1, S1/S2 < 0.2 in Comparative embodiment 1, which is likely to lead to weaker structural strength and mechanical properties of the first current collector in the outer electrode plate, thereby weakening the overall protective capability of the packaging bag 20. The S1/S2 > 0.5 in Comparative embodiment 2, which is likely to lead to incomplete fracture of the first current collector in the outer electrode plate under the action of the impact force, so that there are more electrode fragments at the impact position, thus causing the risk of a short circuit.

When S1/S2 in Embodiments 1- 4 satisfies 0.2 ≤ S1/S2 ≤ 0.5, the first current collector 111 in the outer electrode plate 11a and the metal layer 21 cooperate to improve the structural strength and mechanical properties of the packaging bag 20. The second strength S2 and the first strength S1 of the battery cell 100 from outside to inside decrease sequentially. When the battery cell 100 is impacted and the impact force reaches a strength that causes the metal layer 21 to fracture and separate, the first current collector 111 in the outer electrode plate 11a may fracture and separate under the action of the impact force. Due to the fracture and separation, there is no connected electrode plate or electrode plate fragments in the fractured outer electrode plate 11a, thereby reducing the risk of occurrence of a short circuit and improving the safety of the battery cell 100.

Table 2 Remaining parameters and test results for each battery cell in Comparative embodiments 3-4 and Embodiments 5-7

The battery cells 100 in the comparative embodiments and the embodiments in Table 2 also have the following same parameters: the second strength S2 of the metal layer of the packaging bag is 692 N/mm²; and a ratio S1/S2 of the first strength S1 of the first current collector in the outer electrode plate and the second strength S2 of the metal layer of the packaging bag is 1.

**Table 2**

| Group | Comparative embodiment 3 | Comparative embodiment 4 | Embodiment 5 | Embodiment 6 | Embodiment 7 |
|---|---|---|---|---|---|
| First thickness d1 of first current collector in outer electrode plate (µm) | 16 | 16 | 16 | 16 | 16 |
| Second thickness d2 of first current collector in inner electrode plate (µm) | 5 | 18 | 16 | 10 | 6 |
| First strength S1 of first current collector in outer electrode plate (N/mm2) | 340 | 340 | 340 | 340 | 340 |
| Third strength S3 of first current collector in inner electrode plate (N/mm2) | 171 | 425 | 340 | 285 | 226 |
| S1/S3 | 2.0 | 0.8 | 1.0 | 1.2 | 1.5 |
| Impact passing rate | 40P/90T | 87P/90T | 86P/90T | 76P/90T | 48P/90T |
| | 44% | 97% | 96% | 84% | 53% |

As can be seen from Table 2, S1/S3 > 1.5 in Comparative embodiment 3, which is likely to lead to weaker structural strength and mechanical properties of the first current collector in the inner electrode plate, thereby weakening the overall protective capability of the packaging bag 20. S1/S3 < 1 in Comparative embodiment 4, although the impact passing rate is higher, the second thickness of the first current collector in the inner electrode plate needs to be increased in order to meet the strength requirements of the first current collector in the inner electrode plate, so that the energy density of the battery cell is reduced, which is not conducive to use. Moreover, it can be understood that S1/S3 < 1, which is likely to cause failure in fracture or incomplete fracture of the first current collector 111 in the inner electrode plate 11b when the first current collector 111 in the outer electrode plate 11a fractures under the action of the impact force, so that there are more electrode fragments at the impact position, thus causing the risk of a short circuit.

When S1/S3 in Embodiments 5-7 satisfies 1 ≤ S1/S3 ≤ 1.5, the second strength S2, the first strength S1, and the third strength S3 of the battery cell 100 from outside to inside decrease sequentially.

When the battery cell 100 is impacted and the impact force reaches a strength that causes the metal layer 21 to fracture and separate, the first current collector 111 in the outer electrode plate 11a and the first current collector 111 in the inner electrode plate 11b may fracture and separate sequentially under the action of the impact force. Due to the fracture and separation, there is no connected electrode plate or electrode plate fragments in the fractured outer electrode plate 11a and inner electrode plate 11b, thereby reducing the risk of occurrence of a short circuit and improving the safety of the battery cell 100.

Table 3 Remaining parameters and test results for each battery cell in Comparative embodiments 5-6 and Embodiments 8-11

The battery cells 100 in the comparative embodiments and the embodiments in Table 3 also have the following same parameters: a ratio δ1/δ3 of the first elongation δ1 of the first current collector in the outer electrode plate and the third elongation δ3 of the first current collector of the inner electrode plate is 1.

**Table 3**

| Group | Comparative embodiment 5 | Comparative embodiment 6 | Embodiment 8 | Embodiment 9 | Embodiment 10 | Embodiment 11 |
|---|---|---|---|---|---|---|
| First thickness d1 of first current collector in outer electrode plate (µm) | 4 | 25 | 5 | 8 | 16 | 20 |
| Second thickness d2 of first current collector in inner electrode plate (µm) | 8 | 8 | 8 | 8 | 8 | 8 |
| First elongation δ1 of first current collector in outer electrode plate | 2.80% | 15.00% | 3.90% | 5.90% | 7.80% | 9.80% |
| Second elongation δ2 of metal layer of packaging bag | 19.50% | 19.50% | 19.50% | 19.50% | 19.50% | 19.50% |
| δ1/δ2 | 0.14 | 0.77 | 0.20 | 0.30 | 0.40 | 0.50 |
| Impact passing rate | 55P/90T | 48P/90T | 60P/90T | 70P/90T | 63P/90T | 57P/90T |
| | 61% | 53% | 67% | 78% | 70% | 63% |

As can be seen from Table 3, δ1/δ2 < 0.2 in Comparative embodiment 5, which is likely to lead to weaker structural strength and mechanical properties of the first current collector in the outer electrode plate, thereby weakening the overall protective capability of the packaging bag 20. δ1/δ2 > 0.5 in Comparative embodiment 6, which is likely to lead to incomplete fracture of the first current collector in the outer electrode plate under the action of the impact force, so that there are more electrode fragments at the impact position, thus causing the risk of a short circuit.

When δ1/δ2 in Embodiments 9-11 satisfies 0.2 ≤ δ1/δ2 ≤ 0.5, the first current collector 111 in the outer electrode plate 11a and the metal layer 21 cooperate to improve the structural strength and mechanical properties of the packaging bag 20. The second elongation δ2 and the first elongation δ1 of the battery cell 100 from outside to inside decrease sequentially. When the battery cell 100 is impacted and the impact force reaches a strength that causes the metal layer 21 to fracture and separate, the first current collector 111 in the outer electrode plate 11a may fracture and separate under the action of the impact force. Due to the fracture and separation, there is no connected electrode plate or electrode plate fragments in the fractured outer electrode plate 11a, thereby reducing the risk of occurrence of a short circuit and improving the safety of the battery cell 100.

Table 4 Remaining parameters and test results for each battery cell in Comparative embodiments 7-8 and Embodiments 12-14

The battery cells 100 in the comparative embodiments and the embodiments in Table 4 also have the following same parameters: the second elongation δ2 of the metal layer of the packaging bag is 19.5%; and a ratio δ1/δ2 of the first elongation δ1 of the first current collector in the outer electrode plate and the second elongation δ2 of the metal layer of the packaging bag is 0.4.

**Table 4**

| Group | Comparative embodiment 7 | Comparative embodiment 8 | Embodiment 12 | Embodiment 13 | Embodiment 14 |
|---|---|---|---|---|---|
| First thickness d1 of first current collector in outer electrode plate (µm) | 16 | 16 | 16 | 16 | 16 |
| Second thickness d2 of first current collector in inner electrode plate (µm) | 5 | 18 | 16 | 10 | 6 |
| First elongation δ1 of first current collector in outer electrode plate | 7.80% | 7.80% | 7.80% | 7.80% | 7.80% |
| Third elongation δ3 of first current collector in inner electrode plate | 3.90% | 9.02% | 7.80% | 6.50% | 5.20% |
| δ1/δ3 | 2.00 | 0.86 | 1.00 | 1.20 | 1.50 |
| Impact passing rate | 40P/90T | 87P/90T | 86P/90T | 76P/90T | 48P/90T |
| | 44% | 97% | 96% | 84% | 53% |

As can be seen from Table 4, δ1/δ3 > 1.5 in Comparative embodiment 7, which is likely to lead to weaker structural strength and mechanical properties of the first current collector in the inner electrode plate, thereby weakening the overall protective ability of the packaging bag 20. δ1/δ3 < 1 in Comparative embodiment 8, although the impact passing rate is higher, the second thickness of the first current collector in the inner electrode plate needs to be increased in order to meet the strength requirements of the first current collector in the inner electrode plate, so that the energy density of the battery cell is reduced, which is not conducive to use. It can be understood that δ1/δ3 < 1, which is likely to cause failure in fracture or incomplete fracture of the first current collector 111 in the inner electrode plate 11b when the first current collector 111 in the outer electrode plate 11a fracture under the action of the impact force, so that there are more electrode fragments at the impact position, thus causing the risk of a short circuit.

When δ1/δ3 in Embodiments 12-14 satisfies 1 ≤ δ1/δ3 ≤ 1.5, the second elongation δ2, the first elongation 61, and the third elongation δ3 of the battery cell 100 from outside to inside decrease sequentially. When the battery cell 100 is impacted and the impact force reaches a strength that causes the metal layer 21 to fracture and separate, the first current collector 111 in the outer electrode plate 11a and the first current collector 111 in the inner electrode plate 11b may fracture and separate sequentially under the action of the impact force. Due to the fracture and separation, there is no connected electrode plate or electrode plate fragments in the fractured outer electrode plate 11a and inner electrode plate 11b, thereby reducing the risk of occurrence of a short circuit and improving the safety of the battery cell 100.

In addition, other changes may be made by persons skilled in the art within the spirit of the present application, and certainly, these changes made in accordance with the spirit of this application shall be included in the scope disclosed in the present application.

## Claims

1. A battery cell (100), comprising an electrode assembly (10) and a packaging bag (20), the electrode assembly (10) being contained in the packaging bag (20), the electrode assembly (10) comprising first electrode plates (11) and second electrode plates (12) mutually stacked in a first direction, and separators (13) disposed between the first electrode plates (11) and the second electrode plates (12), and each of the first electrode plates (11) comprising a first current collector (111), **characterized in that**:
the first electrode plates (11) comprise two outer electrode plates (11a) and at least one inner electrode plate (11b); in the first direction, the two outer electrode plates (11a) are disposed on two outermost sides of the electrode assembly (10) respectively, the at least one inner electrode plate (11b) is disposed between the two outer electrode plates (11a), and the second electrode plates (12) are disposed between the two outer electrode plates (11a); and
the packaging bag (20) comprises a metal layer (21), and a ratiobetween a first strength S1 of the first current collector (111) in at least one of the two outer electrode plate and a second strength S2 of the metal layer (21) satisfies: 0.2 ≤ S1/S2 ≤ 0.5.

2. The battery cell (100) according to claim 1, **characterized in that** 0.3 ≤ S1/S2 ≤ 0.4.

3. The battery cell (100) according to claim 1 or 2, **characterized in that** a ratio between the first strength S1 and a third strength S3 of the first current collector (111) in the at least one inner electrode plate (11b) satisfies: 1 ≤ S1/S3 ≤ 1.5.

4. The battery cell (100) according to claim 3, **characterized in that** 1 ≤ S1/S3 ≤ 1.2.

5. The battery cell (100) according to any one of claims 1-4, **characterized in that** a ratio between a first elongation δ1 of the first current collector (111) in at least one of the two outer electrode plates and a second elongation δ2 of the metal layer (21) satisfies: 0.2 ≤ δ1/δ2 ≤ 0.5.

6. The battery cell (100) according to claim 5, **characterized in that** 0.3 ≤ δ1/δ2 ≤ 0.4.

7. The battery cell (100) according to any one of claims 1-6, **characterized in that** a ratio between the first elongation δ1 and a third elongation δ3 of the first current collector (111) in the at least one inner electrode plate (11b) satisfies: 1 ≤ δ1/δ3 ≤ 1.5.

8. The battery cell (100) according to claim 7, **characterized in that** 1 ≤ δ1/δ3 ≤ 1.2.

9. The battery cell (100) according to any one of claims 1-8, **characterized in that** a ratio between a first thickness d1 of the first current collector (111) in at least one of the two outer electrode plates, and a second thickness d2 of the first current collector (111) in the at least one inner electrode plate (11b) satisfies: d2 ≤ d1.

10. The battery cell (100) according to any one of claims 1-9, **characterized in that** the first current collector (111) is made of copper.

11. The battery cell (100) according to any one of claims 1-10, **characterized in that** the metal layer (21) is made of steel.

12. The battery cell (100) according to any one of claims 1-11, **characterized in that** the first electrode plate further comprises a first active material layer (112) applied on the first current collector (111); in the outer electrode plate, the first active material layer (112) is applied on a surface, facing the inner electrode plate (11b), of the first current collector (111); and in the inner electrode plate (11b), the first active material layers (112) are applied on two surfaces, opposite to each other in the first direction, of the first current collector (111).

13. A battery (200), **characterized in that** the battery comprises the battery cell (100) according to any one of claims 1 to 12.

14. An electric device (300), **characterized in that** the electric device comprises the battery (200) according to claim 13.
